(19) Europäisches Patentamt / European Patent Office / Office européen des brevets

(11) **EP 2 587 918 B1**

(12) **EUROPEAN PATENT SPECIFICATION**

(45) Date of publication and mention
of the grant of the patent:
**09.09.2015 Bulletin 2015/37**

(21) Application number: **11735823.4**

(22) Date of filing: **29.06.2011**

(51) Int Cl.:
*A01N 37/10* (2006.01)  *A01N 43/36* (2006.01)
*A01N 59/16* (2006.01)  *A01P 13/00* (2006.01)
*A01P 9/00* (2006.01)  *C09D 5/16* (2006.01)
*D06M 13/203* (2006.01)  *D06M 13/352* (2006.01)

(86) International application number:
**PCT/EP2011/060873**

(87) International publication number:
**WO 2012/001027 (05.01.2012 Gazette 2012/01)**

(54) **ANTIFOULING BENZOATE COMBINATIONS COMPRISING FERRIC BENZOATE AND TRALOPYRIL**

BEWUCHSHEMMENDE WIRKSTOFFKOMBINATIONEN ENTHALTEND EISEN(III)BENZOAT UND TRALOPYRIL

COMBINAISONS ANTISALISSURE COMPRENANT DU BENZOATE FERRIQUE ET DU TRALOPYRIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.07.2010 EP 10168099**

(43) Date of publication of application:
**08.05.2013 Bulletin 2013/19**

(73) Proprietor: **Janssen Pharmaceutica, N.V.
2340 Beerse (BE)**

(72) Inventor: **KEMPEN, Tony Mathilde Jozef
B-2340 Beerse (BE)**

(74) Representative: **Verberckmoes, Filip Gerard
Janssen Pharmaceutica N.V.
J&J Patent Law Department
Turnhoutseweg 30
2340 Beerse (BE)**

(56) References cited:
**WO-A1-03/039256      WO-A1-2007/116051
WO-A2-2007/088172**

• DEL AMO B ET AL: "A multipurpose compound for protective coatings", COLLOIDS AND SURFACES. A, PHYSICACHEMICAL AND ENGINEERING ASPECTS, ELSEVIER, AMSTERDAM, NL, vol. 324, no. 1-3, 1 July 2008 (2008-07-01), pages 58-64, XP022735387, ISSN: 0927-7757, DOI: DOI:10.1016/J.COLSURFA. 2008.03.026 [retrieved on 2008-03-28] cited in the application

**Description**

The present invention relates to the combination of the biocidal compound ferric benzoate and the biocidal compound tralopyril, which combination provides an improved protecting effect against fouling organisms, and the use of these combinations for protecting materials against fouling organisms. More particularly, the present invention relates to compositions comprising a combination of a component (I) and a component (II) in respective proportions to provide a synergistic effect against fouling organisms, whereby component (I) is ferric benzoate, and component (II) is tralopyril; with the proviso that said composition is essentially free of cuprous oxide.

It has now been found that the combination of the biocidal component (I) ferric benzoate and the biocidal component tralopyril (II), has a synergistic effect on the control of fouling organisms. As used herein, "control" is defined to include the inhibition of attachment or settlement of fouling organisms to the surface of an object, the removal of fouling organisms that are attached to the surface of an object, and the growth of fouling organisms.

Ferric benzoate (CAS Registry Number 14534-87-3) is also known as iron benzoate of iron (III) benzoate and is hereinafter referred to as component (I).

The antifouling properties of ferric benzoate (I) and its use in anticorrosive paints have been described by B. del Amo et al. in Colloids and Surfaces A : Physicochem. Eng. Aspects, vol 324, p. 58 - 64 (2008).

WO-2007/061546 discloses stabilized paint compositions containing a hydrolyzable acrylate resin such as copper acrylate, zinc acrylate, or silyl acrylate, a metal salt of pyrithione, cuprous oxide, and a primary stabilizing agent selected from the group consisting of benzoic acid, hydroxypyridine, metal salts of benzoic acid, and hydroxypyridine.

WO-2007/088172 discloses compositions containing tralopyril and a broad range of zinc compounds such as e.g. ZnO, $ZnCl_2$, $ZnSO_4$, zineb and zinc pyrithione having a synergistic antifouling effect.

The documents WO-2007/116051 and WO-03/039256 also disclose synergistic compositions comprising tralopyril.

The wording "essentially free of cuprous oxide" as used herein means that the compositions of the present invention do no comprise cuprous oxide that has been intentionally added to the compositions.

Surfaces or objects exposed to humid or aqueous environments are readily colonized by aquatic organisms such as algae, fungi, bacteria, microbes, and aquatic animals such as, e.g. tunicates, hydroids, bivalve mollusks, bryozoans, polychaete worms, sponges and barnacles. As these organisms settle on or attach to said surfaces, the value of the exposed objects diminishes. The attachment or settlement of said organisms is also known as 'fouling' of a structure. The exterior, but possibly also the interior of the object may deteriorate, the surface changes, e.g. from smooth, clean and streamlined to rough, foul and turbulent, the weight of the object increases by the deposit of the organisms and their remnants, and the vicinity of the object may become obstructed or encumbered. The function of the object and system involved lowers and the quality of the aqueous environment deteriorates. The common method of controlling the attachment of fouling organisms is by treating the structure to be protected with a coating which comprises an antifouling agent.

The combinations of antifouling biocidal compounds as claimed in the present invention are especially suitable to protect surfaces or objects in constant or frequent contact with water from fouling or attachment or settlement of algae, by applying to said surfaces or objects a composition comprising component (I) and component (II) in respective proportions to provide a synergistic effect against fouling organisms. Alternatively, combinations of component (I) and component (II) may be incorporated into the substrate to be protected from fouling.

Examples of said surfaces or objects are for instance, flexible nets or rigid cages used in marine or freshwater aquaculture, fishing nets, ship hulls, harbor installations, piers and pilings, drying docks, sluice-gates, locks, mooring masts, buoys, offshore oil rigging equipment, drilling platforms, bridges, pipelines, cables, ballast water tanks, ship reservoirs that draw water from infested bodies of water, recreational equipment, such as surfboards, jet skis, and water skis, and any other object in constant or frequent contact with water.

The invention also provides a method to protect materials, in particular surfaces or objects in frequent or constant contact with water, against fouling organisms by applying to said objects a composition comprising an effective antifouling amount of a combination of a component (I) together with a component (II) wherein the amount of component (I) and component (II) are in respective proportions to provide a synergistic effect against fouling organisms.

The present invention further provides a method of protecting a surface which comprises applying to the surface a composition comprising an effective antifouling amount of a combination of a component (I) together with a component (II) wherein the amount of component (I) and component (II) are in respective proportions to provide a synergistic effect against fouling organisms.

An especially important use of the method of the invention comprises a method for inhibiting fouling of nets used in aquaculture, which comprises applying to the net an antifouling composition in accordance with the invention. The effects of biofouling to the aquaculturist are largely detrimental. Hydrodynamic forces on a fouled net, which can reduce cage volume, constrict net openings and stress moorings, have been calculated at up to 12.5 times that of a clean net. Concurrently, the weight of cages can severely increase, causing further structural stress as well as a reduction in cage buoyancy and increased net deformation. Fouling can also cause physical damage to the nets themselves. Fouling effectively decreases the specified mesh size by increasing net surface area, which causes disruption to water flow. As a result, nutrient exchange and waste removal are restricted, which not only affects the health of stock but also the surrounding environment; for example, by causing localised eutrophication. Similarly, supplies of oxygen may be disrupted and anoxic conditions can develop; this is particularly pertinent in temperate regions during the summer when the period of most aggressive fouling coincides with highwater temperatures that further reduce oxygen levels. Decreases in DO levels can be further compounded by the respiratory activity of fouling organisms themselves. Indirect effects of biofouling development on fish cages and netting include remedial costs; for example, cleaning and repairs which, in turn, have detrimental environmental implications and can further stress stock through increased disturbance. The complex fouling communities that can develop may indirectly cause further stress to stock by affording habitat to a range of 'harmful' diseases and parasites; for example, 'netpen liver disease', amoebic gill disease, the nematode Hysterothylacium aduncum and the sea louse Lepeophtheirus salmonis. Fouling can also create 'Health and Safety' concerns, *i.e.* fouling increases the weight and slipperiness of equipment that is handled and, in the tropics, the frequency of contact with stinging and cutting organisms is raised. The increase in disease and parasites due to the development of fouling adds to the concerns over the use of combatant chemicals, such as cypermethrin, azamethiphos and emamectin benzoate, which are used for their treatment but have, potentially, detrimental environmental impacts. Despite the use of some preventative practical procedures, the main protective method against fouling, whether it be for ships or nets, involves the use of antifouling paints. These are applied to nets typically made from synthetic fibres, including polyamide (nylon). Antifouling paints containing only copper, in the monovalent form of cuprous oxide, is the paint technology used almost exclusively in the fish farming industry today. Antifouling paints based on cuprous oxide have a limited lifetime. Furthermore such coatings are known sources of pollution from aquaculture and are responsible for elevated levels of copper close to fish-farms. Net washing plants have problems dealing with the copper containing waste and sludge. The waste must be specially disposed of and such safeguards evidently increase costs.

Another important use of the method of the invention comprises a method for inhibiting fouling of a ship's hull, which comprises applying to the hull an antifouling composition in accordance with the invention. Fouling on the hulls of ships for example increases frictional drag with a corresponding decrease in speed and maneuverability and an increase in fuel consumption and increased maintenance costs associated with removal of the fouling.

The compositions comprising a combination of a component (I) together with a component (II) wherein the amount of component (I) and component (II) are in respective proportions to provide a synergistic effect against fouling organisms can be used to protect constructions such as, e.g. swimming pools, baths, cooling water circulation circuits and industrial baths in various installations, e.g. in manufacturing plants or in air-conditioning installations, the function of which can be impaired by the presence and/or the multiplication of fouling organisms. Further examples are buildings and parts of buildings such as floors, outer and inner walls or ceilings, or places suffering from dampness such as cellars, bathrooms, kitchens, washing houses and the like, and which are hot-beds for fouling. Fouling not only is problematic from the viewpoint of hygiene and aesthetics, but also causes economic losses because said buildings and/or decorating materials deteriorate more rapidly than desired.

Another application of the combinations of the present invention is the treatment or disinfection of ballast water to reduce or eliminate the presence of aquatic organisms such as phytoplankton (dinoflagellates and diatoms), crustaceans (crabs, shrimp, copepods, amphipods), rotifers, polychaetes, molluscs, fish, echinoderms, ctenophores, and coelenterates.

The synergistic antifouling compositions of the present invention can also be used in a variety of applications :

- industrial aqueous process fluids, e.g. cooling waters, pulp and paper mill process waters and suspensions, secondary oil recovery systems, spinning fluids, metal working fluids, and the like
- in-tank/in-can protection of aqueous functional fluids, e.g. polymer emulsions, water based paints and adhesives, glues, starch slurries, thickener solutions, gelatin, wax emulsions, inks, polishes, pigment and mineral slurries, rubber latexes, concrete additives, drilling mud's, toiletries, aqueous cosmetic formulations, pharmaceutical formulations, and the like.

The term "fouling organisms" is meant to comprise organisms that attach, settle, grow on or adhere to various kinds of surfaces, in particular in humid or aqueous environments such as, marine waters, fresh waters, brackish waters, rain water, and also cooling water, drainage water, waste water and sewage. Fouling organisms are Algae such as, for example, Microalgae, e.g. *Amphora, Achnanthes, Navicula, Amphiprora, Melosira, Cocconeis, Chlamydomonas, Chlorella, Ulothrix, Anabaena, Phaeodactylum, Porphyridium;* Macroalgae, e.g. *Enteromorpha, Cladophora, Ectocarpus, Acrochaetium, Ceramium, Polysiphonia* and *Hormidium sp.;* fungi; microbes; tunicates, including members of the class Ascidiacea such as *Ciona intestinalis, Diplosoma listerianium,* and *Botryllus schlosseri;* members of the class Hydrozoa, including *Clava squamata, Hydractinia echinata, Obelia geniculata* and *Tubularia larynx;* bivalves, including *Mytilus edulis, Crassostrea virginica, Ostrea edulis, Ostrea chilensis, Dreissena polymorpha* (zebra mussels) and *Lasaea rubra;*

bryozoans, including *Electra pilosa, Bugula neritina,* and *Bowerbankia gracilis;* polychaete worms, including *Hydroides norvegica;* sponges; and members of the class Crustacea, including *Artemia,* and Cirripedia (barnacles), such as *Balanus amphitrite, Lepas anatifera, Balanus balanus, Balanus balanoides, Balanus hameri, Balanus crenatus, Balanus improvisus, Balanus galeatus,* and *Balanus eburneus;* and *Elminius modestus,* and *Verruca.*

The relative proportions of component (I) and component (II) in compositions comprising a combination of component (I) and component (II) are those proportions which result in a synergistic effect against fouling organisms when compared to a composition including, as an active ingredient, either component (I) alone or component (II) alone. As will be understood by those skilled in the art, the said synergistic effect may be obtained within various proportions of components (I) and (II) in the composition, depending on the kind of fouling organism towards which effect is measured and the substrate to be treated. Based on the teachings of the present application, determination of the synergistic effect of such combinations can be performed according to the procedures of the Poison Plate Assay as described in Experiment 1. As a general rule, however, it may be said that for most fouling organisms the suitable proportions by weight of the amount of component (I) to component (II) in the combinations should lie in the range from 10:1 to 1:10. Particularly, this range is from 4:1 to 1:4, more particularly from 3:1 to 1:3 or 2:1 to 1:2. A particular ratio of component (I) to component (II) in the compositions of the present invention is from 4:1 to 1:3, more particularly from 3:1 to 1:3 or 2:1 to 1:2.

In a further embodiment the present invention also relates to a composition only containing a combination of the two active ingredients : i.e. ferric benzoate as a component (I), and tralopyril as a component (II) - without further active ingredients being present - and one or more carriers. This also applies to the methods of treatment as described in the present invention. Hence also compositions are covered containing a combination of ferric benzoate as a component (I) and tralopyril as a component (II); whereby component (I) and component (II) are in respective proportions to provide a synergistic biocidal effect; and one or more carriers. As a general rule, it may be said that the suitable proportions by weight of the amount of component (I) to component (II) in these biocidal compositions should lie in the range from 10:1 to 1:10. Particularly, this range is from 4:1 to 1:3, more particularly from 3:1 to 1:3 or 2:1 to 1:2. The carriers are described hereinbefore.

The quantity of each of the active ingredients in compositions comprising a combination of a component (I) and a component (II) will be so that a synergistic effect is obtained. In particular it is contemplated that the ready to use compositions of the present invention comprise component (I) in an amount of at least 1 wt % based on the total weight of the composition. More particular such ready to use compositions comprise component (I) in an amount from 1 wt% to 40 wt% based on the total weight of the composition. The amount of component (II) in said ready to use compositions will be so that a synergistic antifouling effect is obtained. In particular the amount of component (II) may range from 1 wt% to 20 wt%, more particular from 2 wt% to 10 wt% based on the total weight of the dry mass of the composition.

In actual practice, antifouling compounds may be brought into contact with a fouling organism by :

a. coating the aquatic structure with an antifouling paint containing the required effective amount of one or more antifouling compounds in such a way that the said compounds are released at a sufficiently high level so that the protected surface area stays fouling free during the desired service life of the antifouling coating;
b. more generally, incorporating, for a good antifouling action, the required effective amount of one or more antifouling compounds in the surface layer of the aquatic structure in such a way that the structure is protected against foulers by a constant release of the said compounds;
c. alternatively, releasing an antifouling-effective amount of said compounds directly into the aquatic environment surrounding the structure to be protected;
d. or any other method in general wherein the said compounds come in contact with the fouling organisms.

For application onto structural surfaces, preferred compositions of the invention include a film-forming component such as a polymer resin solution. Exemplary polymer resins include unsaturated polyester resins formed from: a) unsaturated acids or anhydrides, such as maleic anhydride, fumaric acid, itaconic acid and the like; b) saturated acids or anhydrides, such as phthalic anhydride, isophthalic anhydride, terephthalic anhydride, tetrahydrophthalic anhydride, tetrahalophthalic anhydride, adipic acid, sebacic acid, and the like; c) glycols, such as ethylene glycol and the like; d) vinyl monomers, such as styrene, vinyl toluene, chlorostyrene, bromostyrene, acrylates like methylmethacrylate, ethylene glycol dimethacrylate and the like. Other suitable resins include vinyl ethers (like vinylisobutyl ether), copper and zinc acrylates, triorganosilyl acrylates, titanium acrylates, vinyl ester-, vinyl acetate-, and vinyl chloride-based resins, elastomeric components, vulcanized rubbers, rosins, metalresinates and urethane-based resins.

A composition comprising a combination of a component (I) and a component (II) in respective proportions to provide a synergistic effect against fouling organisms is thus suitably used together with carriers and additives, including wetting agents, dispersing agents, stickers, adhesives, emulsifying agents and the like such as those conventionally employed by the artisan in preparing antifouling compositions. The antifouling compositions of the present invention may further comprise suitable substances known in the art of formulation, such as, for example natural or regenerated mineral substances, solvents, dispersants, surfactants, wetting agents, adhesives, thickeners, binders, anti-freeze agents, repellents, color additives, corrosion inhibitors, water-repelling agents, siccatives, UV-stabilizers and other active ingredients. Suitable surfactants are non-ionic, cationic and/or anionic surfactants having good emulsifying, dispersing and wetting properties. The term "surfactants" will also be understood as comprising mixtures of surfactants.

Antifouling compositions comprising a combination of a component (I) and a component (II) in respective proportions to provide a synergistic effect against fouling organisms may be prepared in any known manner, for instance by homogeneously mixing, coating and/or grinding the combination of active ingredients (*i.e.* a component (I) and a component (II)), in a one-step or multi-steps procedure, with the selected carrier material and, where appropriate, the other additives such as surface-active agents, dispersants, thickeners, binders, color additives, corrosion inhibitors and the like.

Suitable carriers for solid formulations, such as dusts, dispersible or flowable powders, are any dispersant that does not adversely affect the active ingredients, for example, clays (for example, kaolin, bentonite, acid clay, and the like), talcs (for example, talc powder, agalmatolite powder, and the like), silica's (for example, diatomaceous earth, silicic acid anhydride, mica powder, and the like), alumina, sulfur powder, activated charcoal, and the like. These solid carriers may be used either singly or in combination of two or more species

Appropriate carriers for liquid formulations are any liquid that does not adversely affect the active ingredients, for example, water, alcohols (for example, methyl alcohol, ethyl alcohol, ethylene glycol, propylene glycol, diethylene glycol, glycerin, etc.), ketones (for example, acetone, methyl ethyl ketone, etc.), ethers (for example, dioxane, tetrahydrofuran, cellosolve, diethylene glycol dimethyl ether, etc.), aliphatic hydrocarbons (for example, hexane, kerosene, etc.), aromatic hydrocarbons (for example, benzene, toluene, xylene, solvent naphtha, methyl naphthalene, etc.), halogenated hydrocarbons (for example, chloroform, carbon tetrachloride, etc.), acid amides (for example, dimethyl formadide, etc.), esters (for example, methyl acetate ester, ethyl acetate ester, butyl acetate ester, fatty acid glycerin ester, etc.), and nitriles (for example, acetonitrile, etc.). These solvents may be used either singly or in combination of two or more species.

Emulsifiable concentrates of the antifouling compositions according to the present invention can also be obtained upon dilution of the combination of components (I) and (II) with at least a suitable organic solvent (*i.e.* a liquid carrier) followed by the addition of at least a solvent-soluble emulsifying agent. Solvents suitable for this type of formulation are usually water-immiscible and belong to the hydrocarbon, chlorinated hydrocarbon, ketone, ester, alcohol and amide classes of solvents, and they can be properly selected by those skilled in the art based on the solubility's of components (I) and (II) respectively. Emulsifiable concentrates usually contain, in addition to the organic solvent(s), from about 10 to 50% by weight of the combination of active ingredients, from about 2 to 20% of emulsifying agent(s) and up to 20% other additives such as stabilisers, corrosion inhibitors and the like. The combination of components (I) and (II) may also be formulated as a suspension concentrate, which is a stable suspension of the active ingredients in a (preferably organic) liquid intended to be diluted with water before use. In order to obtain such a non-sedimenting flowable product, it is usually necessary to incorporate therein up to about 10% by weight of at least a suspending agent selected from known protective colloids and thixotropic agents. Other liquid formulations like aqueous dispersions and emulsions, for example obtained by diluting a wettable powder or a concentrate (such as previously described) with water, and which may be of the water-in-oil or the oil-in-water type, also lie within the scope of the present invention.

The present invention also provides protective antifouling compositions, for instance in the form of paints, coatings or varnishes, comprising the said combination of components (I) and (II) together with one or more additives suitable for their formulation. The total amount of the combination of components (I) and (II) in such protective compositions may range from 2 to 10% (w/v). Suitable additives for use in said protective compositions are quite conventional in the art and include, for instance, at least an organic binder (preferably in aqueous form) such as an acrylic or vinyl-based emulsion or rosin compounds; mineral carriers such as calcium carbonate; surface-active agents such as previously described; viscosity regulators; corrosion inhibitors; pigments such as titanium dioxide; stabilisers such as sodium benzoate, sodium hexametaphosphate and sodium nitrite; mineral or organic colorants and the like. The ways of formulating such additives together with a component (I) and a component (II) of the present invention is also well within the knowledge of those skilled in the art. Such protective compositions may be used not only to cure and/or limit the damaging effects of fouling organisms but also in order to prevent deterioration to occur on materials which may be subjected to the harmful environment and effects of fouling organisms.

The antifouling compositions according to the present invention can be applied by a number of conventional methods, such as hydraulic spray, air-blast spray, aerial spray, atomising, dusting, scattering or pouring. The most appropriate method will be chosen by those skilled in the art in accordance with the intended objectives and the prevailing circumstances, namely the kind of fouling organism to be controlled, the type of equipment available and the type of material to be protected.

As previously indicated, the combination of components (I) and (II) is preferably applied in the form of compositions wherein both said ingredients are intimately admixed in order to ensure simultaneous administration to the materials to be protected. Administration or application of both components (I) and (II) can also be a "sequential-combined" administration or application, *i.e.* component (I) and component (II) are administered or applied alternatively or sequentially in the same place in such a way that they will necessarily become admixed together at the site to be treated. This will be achieved namely if sequential administration or application takes place within a short period of time e.g. within less than 24 hours, preferably less than 12 hours. This alternative method can be carried out for instance by using a suitable single package comprising at least one container filled with a formulation comprising the active component (I) and at least one container filled with a formulation comprising an active component (II). Therefore the present invention also encompasses a product containing :

- (a) a composition comprising ferric benzoate as a component (I), and
- (b) a composition comprising tralopyril as a component (II), as a combination for simultaneous or sequential use, wherein said (a) and (b) are in respective proportions to provide a synergistic effect against fouling organisms;

with the proviso that said product is essentially free of cuprous oxide.

Experiment : Poison plate assay

Experiment 1: poison plate assay (IV 07/2010)

Name of the primary compound:     - ferric benzoate as component (I)

Name of the combination partners:     - tralopyril as component (II);

Test models:    Algicide: To each well of a 96-well microtiter plate, 300 $\mu$l BG11 medium, containing the test compounds in one of the concentrations of a dose series is added. The liquid freshwater mineral medium is inoculated by adding an aliquot of an actively growing, 3 week old liquid BG11 culture of algae and incubated at 21°C, 65% relative humidity, 1000 Lux 16hr/day. The growth is evaluated after three weeks.

Crustaceans: the brine shrimp *Artemia salina* is used as a model organism for crustaceous marine foulers, such as barnacles. *Artemia salina* cysts (Great Salt Lake strain) are allowed to hatch in aerated artificial seawater according to Probst. Approximately 20 *Artemia salina* instar II larvae obtained in this way are added to 300 $\mu$l of the same artificial seawater medium. The medium contains the test compounds in a dose range as detailed below ("Concentrations"). The animals are incubated in the laboratory at 25°C and survival of the crustaceans is evaluated after one day.

Test combinations:

| % product A | + | % product B |
| --- | --- | --- |
| 100 | + | 0 |
| 80 | + | 20 |
| 66 | + | 33 |
| 50 | + | 50 |
| 33 | + | 66 |
| 20 | + | 80 |
| 0 | + | 100 |

Concentrations :    a 24-step doses series is applied, each step being 0.75 times the previous step, as follows: 25.00 - 18.75 .... 0.04 - 0.03 ppm.

Culture medium :    algae: BG 11 liquid mineral medium

*Artemia salina:* artificial seawater

Test Species of algae :    *Tribonema sp.* CCAP800/2

Test species of crustaceans :    *Artemia salina* Great Salt Lake Strain

Evaluation :    algae : after 3 weeks of exposure

*Artemia :* after 24 hours of exposure

Evaluation criteria :    the MIC value is reported : the lowest test concentration (in mg/l = ppm) at which complete inhibition of organism growth was observed.

Synergism between component (I) and one of the components (II) was determined by using the Synergy Index method described by Kull *et al.* (Kull, F.C., P.C. Eismann, H.D. Sylvestrowicz, and R.L. Mayer (1961) "Mixtures of quaternary ammonium compounds and long-chain fatty acids as antifungal agents" Applied Microbiology 9: 538-541; also see Zwart Voorspuij, A.J., and C.A.G. Nass (1957) "Some aspects of the notions additivity, synergism and antagonism in the simultaneous activity of two antibacterial agents in vitro" Arch. intern. Pharmacodynamie 109: 211-228; Steinberg, D.C. (2000) "Measuring synergy" cosmetics & Toiletries 115(11): 59-62; which is calculated as follows for two compounds A and B:

$$\text{Synergy Index (SI)} = \frac{Q_a}{Q_A} + \frac{Q_b}{Q_B}$$

wherein:

- $Q_A$ is the concentration of compound A in ppm, acting alone, which produced an end point (e.g. MIC),
- $Q_a$ is the concentration of compound A in ppm, in the mixture, which produced an end point (e.g. MIC),
- $Q_B$ is the concentration of compound B in ppm, acting alone, which produced an end point (e.g. MIC),
- $Q_b$ is the concentration of compound B in ppm, in the mixture, which produced an end point (*e.g.* MIC).

MIC is the minimum inhibitory concentration, *i.e.* the lowest concentration of each test compound or mixture of test compounds sufficient to inhibit visible growth.

When the Synergy Index is greater than 1.0, antagonism is indicated. When the SI is equal to 1.0, additivity is indicated. When the SI is less than 1.0, synergism is demonstrated.

When the Synergy Index is greater than 1.0, antagonism is indicated. When the SI is equal to 1.0, additivity is indicated. When the SI is less than 1.0, synergism is demonstrated.

Table 1 : MIC-values (minimum inhibitory concentration in ppm) and synergy index of ferric benzoate (I) and tralopyril (II) their combination against *Artemia salina*

| Combination | ratio (I) to (II) | MIC-values in ppm | synergy index |
| --- | --- | --- | --- |
| (I) + (II) | 100+0 | 33 | - |
| (I) + (II) | 80 + 20 | 0.25 | 0.63 |
| (I) + (II) | 66 + 33 | 0.19 | 0.80 |
| (I) + (II) | 50 + 50 | 0.14 | 0.88 |
| (I) + (II) | 33 + 66 | 0.11 | 0.92 |
| (I) + (II) | 20 + 80 | 0.11 | 1.10 |
| (I) + (II) | 0+100 | 0.08 | - |

**Claims**

1. A composition comprising a combination of a component (I) and a component (II) in respective proportions to provide a synergistic effect against fouling organisms, whereby component (I) is ferric benzoate (I), and component (II) is tralopyril; with the proviso that said composition is essentially free of cuprous oxide.

2. The composition according to claim 1 wherein the ratio by weight of component (I) to component (II) is 4:1 to 1:3.

3. A composition according to any of claims 1 to 2 wherein the ratio by weight of component (I) to component (II) is 3:1 to 1:3.

4. A composition according to any of claims 1 to 3 wherein the ratio by weight of component (I) to component (II) is 2:1 to 1:2.

5. A composition as claimed in any of claims 1 to 4 wherein the amount of component (I) ranges from 1 wt% to 40 wt% based on the total weight of the composition.

6. Use of a composition according to any of claims 1 to 5 for the control of fouling organisms.

7. A product containing

(a) a composition comprising ferric benzoate as a component (I); and

(b) a composition comprising tralopyril as a component (II);

as a combination for simultaneous or sequential use, wherein said (a) and (b) are in respective proportions to provide a synergistic effect against fouling organisms; with the proviso that said product is essentially free of cuprous oxide.

## Patentansprüche

1. Zusammensetzung, umfassend eine Kombination einer Komponente (I) und einer Komponente (II) in solchen jeweiligen Anteilen, dass sich ein synergistischer Effekt gegen Fouling-Organismen ergibt, wobei es sich bei Komponente (I) um Eisen(III)-benzoat handelt und es sich bei Komponente (II) um Tralopyril handelt; mit der Maßgabe, dass die Zusammensetzung im Wesentlichen frei von Kupfer(I)-oxid ist.

2. Zusammensetzung nach Anspruch 1, wobei das Gewichtsverhältnis von Komponente (I) zu Komponente (II) 4:1 bis 1:3 beträgt.

3. Zusammensetzung nach einem der Ansprüche 1 bis 2, wobei das Gewichtsverhältnis von Komponente (I) zu Komponente (II) 3:1 bis 1:3 beträgt.

4. Zusammensetzung nach einem der Ansprüche 1 bis 3, wobei das Gewichtsverhältnis von Komponente (I) zu Komponente (II) 2:1 bis 1:2 beträgt.

5. Zusammensetzung nach einem der Ansprüche 1 bis 4, wobei die Menge von Komponente (I) im Bereich von 1 Gew.-% bis 40 Gew.-%, bezogen auf das Gesamtgewicht der Zusammensetzung, liegt.

6. Verwendung einer Zusammensetzung nach einem der Ansprüche 1 bis 5 zur Bekämpfung von Fouling-Organismen.

7. Produkt, enthaltend

(a) eine Zusammensetzung, die Eisen(III)-benzoat als Komponente (I) umfasst; und

(b) eine Zusammensetzung, die Tralopyril als Komponente (II) umfasst;

als Kombination für die gleichzeitige oder aufeinanderfolgende Verwendung, wobei (a) und (b) in solchen jeweiligen Anteilen vorliegen, dass sich ein synergistischer Effekt gegen Fouling-Organismen ergibt; mit der Maßgabe, dass das Produkt im Wesentlichen frei von Kupfer(I)-oxid ist.

## Revendications

1. Composition comprenant une combinaison d'un composant (I) et d'un composant (II) selon des proportions respectives, afin de fournir un effet synergique contre des organismes d'encrassement, dans laquelle le composant (I) est le benzoate ferrique (I) et le composant (II) est le tralopyril ; à condition que ladite composition soit essentiellement dépourvue d'oxyde cuivreux.

2. Composition selon la revendication 1, dans laquelle le rapport pondéral du composant (I) au composant (II) va de 4:1 à 1:3.

3. Composition selon l'une quelconque des revendications 1 à 2, dans laquelle le rapport pondéral du composant (I) au composant (II) va de 3:1 à 1:3.

4. Composition selon l'une quelconque des revendications 1 à 3, dans laquelle le rapport pondéral du composant (I) au composant (II) va de 2:1 à 1:2.

5. Composition selon l'une quelconque des revendications 1 à 4, dans laquelle la quantité de composant (I) va de 1% en poids à 40% en poids, sur la base du poids total de la composition.

6. Utilisation d'une composition selon l'une quelconque des revendications 1 à 5, pour le contrôle d'organismes d'encrassement.

7. Produit contenant

(a) une composition comprenant du benzoate ferrique comme composant (I) ; et
(b) une composition comprenant du tralopyril comme composant (II) ;

comme combinaison pour une utilisation simultanée ou séquentielle, où lesdits (a) et (b) se trouvent selon des proportions respectives afin de fournir un effet synergique contre des organismes d'encrassement, à condition que ledit produit soit essentiellement dépourvu d'oxyde cuivreux.

**EP 2 587 918 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007061546 A
- WO 2007088172 A
- WO 2007116051 A
- WO 03039256 A

### Non-patent literature cited in the description

- **B. DEL AMO et al.** *Colloids and Surfaces A : Physicochem. Eng. Aspects,* 2008, vol. 324, 58-64
- **KULL, F.C. ; P.C. EISMANN ; H.D. SYLVESTROWICZ ; R.L. MAYER.** Mixtures of quaternary ammonium compounds and long-chain fatty acids as antifungal agents. *Applied Microbiology,* 1961, vol. 9, 538-541
- **ZWART VOORSPUIJ, A.J. ; C.A.G. NASS.** Some aspects of the notions additivity, synergism and antagonism in the simultaneous activity of two antibacterial agents in vitro. *Arch. intern. Pharmacodynamie,* 1957, vol. 109, 211-228
- **STEINBERG, D.C.** Measuring synergy. *cosmetics & Toiletries,* 2000, vol. 115 (11), 59-62